# EUROPÄISCHE PATENTSCHRIFT

(11) **EP 0 536 373 B1**
(45) Veröffentlichungstag und Bekanntmachung des Hinweises auf die Patenterteilung: **26.06.1996**
(21) Anmeldenummer: 92909378.9
(22) Anmeldetag: 24.04.1992
(51) Int. Cl.: B29C 45/42

(54) **SPRITZGIESSMASCHINE**
INJECTION MOULDING MASHINE
PRESSE D'INJECTION

(30) Priorität: 26.04.1991 AT 875/91
(43) Veröffentlichungstag der Anmeldung: 14.04.1993
(73) Patentinhaber: Engel Maschinenbau Gesellschaft m.b.H., A-4311 Schwertberg (AT)
(72) Erfinder: URBANEK, Otto, A-4020 Linz (AT); AUMAYR, Walter, A-4332 Au/Donau (AT)
(74) Vertreter: Hofinger, Engelbert, DDr.
(86) Internationale Anmeldenummer: AT9200058
(87) Internationale Veröffentlichungsnummer: WO9219434

(56) Entgegenhaltungen:
- EP-A- 0 205 152
- EP-A- 0 311 133
- DE-A- 2 414 741
- US-A- 4 221 532
- PATENT ABSTRACTS OF JAPAN vol. 13, no. 320 (M-853)(3668) 20. Juli 1989 & JP-A-1 105 719 (KOMATSU) 24. April 1989 siehe Zusammenfassung

## Beschreibung

Die Erfindung bezieht sich auf eine Spritzgießmaschine mit einem Maschinenrahmen und mit Formaufspannplatten, die Formhälften tragen, wobei der Raum zwischen den Formaufspannplatten frei von den üblichen Längsholmen ist.

Eine derartige Spritzgießmaschine ist in der EP-A1-0 311 133 beschrieben.

Bekannte Handhabungsvorrichtungen mit denen nach dem Spritzgießvorgang die Spritzlinge aus der Form entfernt werden, sind konstruktiv aufwendig und demzufolge teuer. Der Grund ist insbesondere darin zu sehen, daß die Greifarme komplizierte Bewegungen durchführen müssen, um den Spritzling, dessen Ausdehnung in ihrer Größenordnung jener der Formaufspannplatte entsprechen kann, aus dem Formbereich zu entfernen. Einigermaßen einfach sind daher nur Handhabungsvorrichtungen, mit welchen lediglich der punktförmige Anguß aus der Spritzgießmaschine entfernt werden kann.

Bei bekannten Handhabungsvorrichtungen der eingangs definierten Art ist der Greifarm um eine querver-laufende horizontale (vgl. DE-C1-36 31 314) oder um eine vertikale (vgl. DE-A-36 41 135) Achse in den Raum zwischen den Längsholmen verschwenkbar, welche den Maschinenrahmen verspannen und die bewegliche Formaufspannplatte tragen. Der Schwenkbereich der gesamten Handhabungsvorrichtung wird dadurch groß, was nicht nur aufgrund des damit verbundenen Platzbedarfes nachteilig ist, sondern insbesondere auch zur Folge hat, daß die Handhabungsvorrichtung nicht zur Gänze innerhalb des Schutzgitters bzw. -gehäuses eingeschlossen werden kann.

Aufgabe der Erfindung ist es, eine Spritzgießmaschine mit einer konstruktiv einfachen Handhabungsvorrichtung vorzuschlagen, deren Schwenkbereich möglichst wenig über das Profil der Spritz-gießmaschine selbst hinausragt, sodaß die Möglichkeit geschaffen werden soll, die Handhabungsvorrichtung zusammen mit der Spritzgießmaschine in ein Schutzgehäuse einzuschließen.

Die gestellte Aufgabe wird dadurch gelöst, daß sie mit einer Handhabungsvorrichtung zum Entfernen geformter Kunststoffteile aus dem Raum zwischen den Formhälften tragenden Formaufspannplatten versehen ist, wobei die in Längsrichtung der Spritzgießmaschine verfahrbare Handhabungsvorrichtung einen in sich starren Greifarm aufweist, der um eine parallel zur Längsrichtung der Spritzgießmaschine verlaufende Achse schwenkbar ist und wobei die Handhabungsvorrichtung mit dem Greifarm am Maschinenrahmen gelagert ist.

Durch den Wegfall der üblichen Längsholme ist es möglich, die Längsachse, um welche der Greifarm schwenkbar ist, ganz nahe an die Formaufspannplatten heranzurücken, wogegen bei bekannten Einrichtungen eine Konsole od.dgl. den notwendigen Abstand zwischen Handhabungsvorrichtung und Längsholmen sicherstellen muß. Die durch die Erfindung mögliche Anordnung der Längsführung der Handhabungsvorrichtung unmittelbar am Maschinenrahmen oder der feststehenden Formaufspannplatte kann zu erheblicher Zeiteinsparung aufgrund der höheren Fahrgeschwindigkeit der Handhabungsvorrichtung führen.

Die Erfindung erlaubt es, den Greifarm starr auszubilden, und auch seine Länge kann konstant sein, obwohl auch eine Ausbildung als Parallelogrammlenker in den Rahmen der Erfindung fällt. Auch bei Änderung der Formhöhe ist es nicht notwendig, den Greifarm zu verändern.

Nachfolgend werden verschiedene Ausführungsbeispiele der Erfindung anhand der Figuren der beiliegenden Zeichnungen beschrieben.

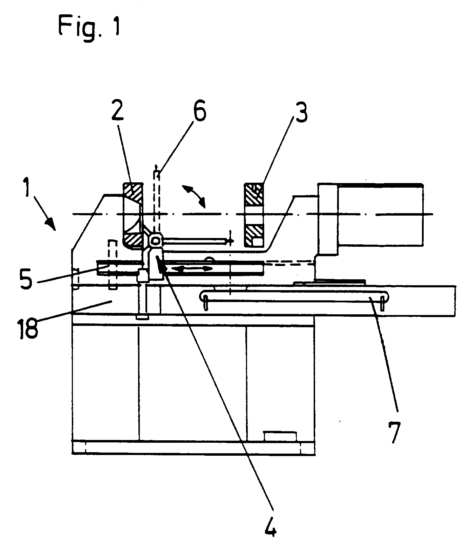

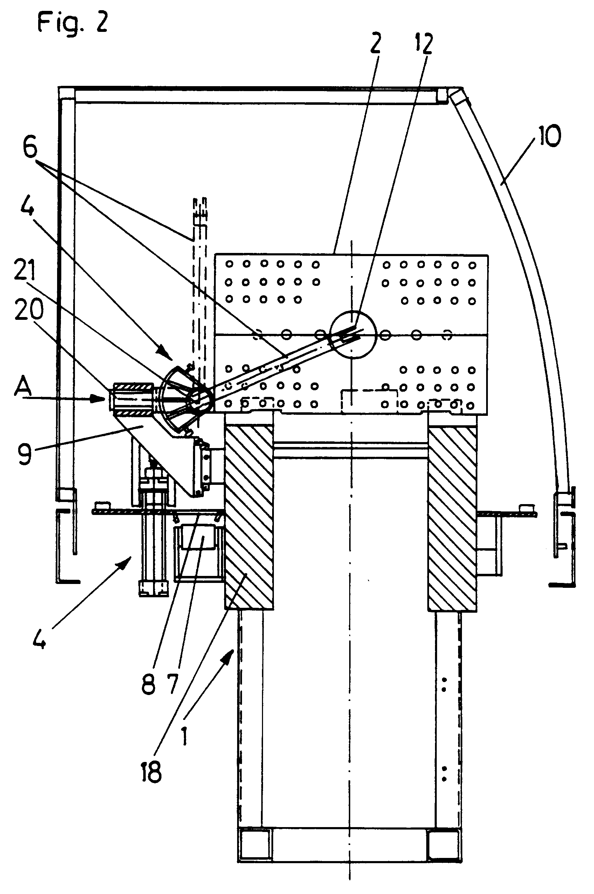

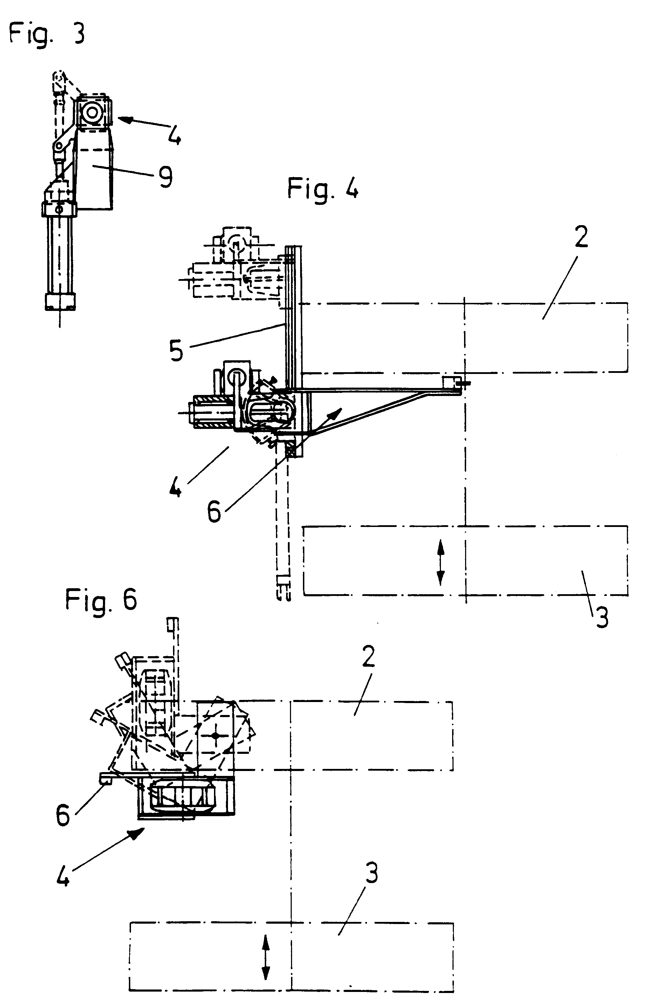

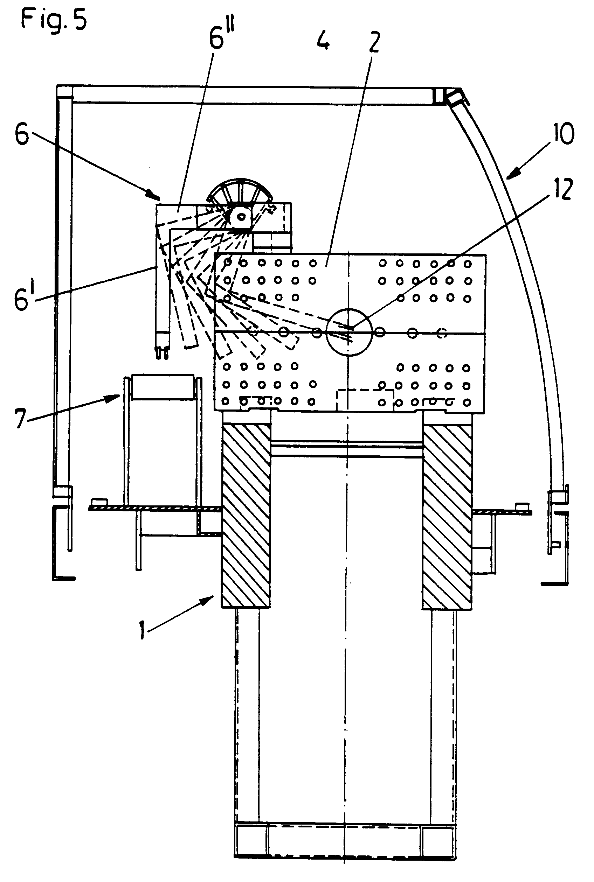

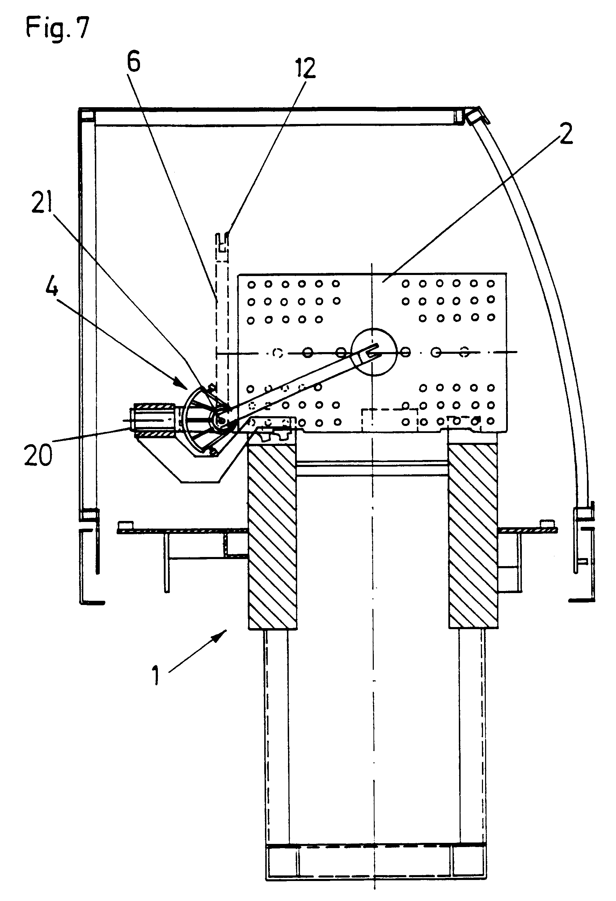

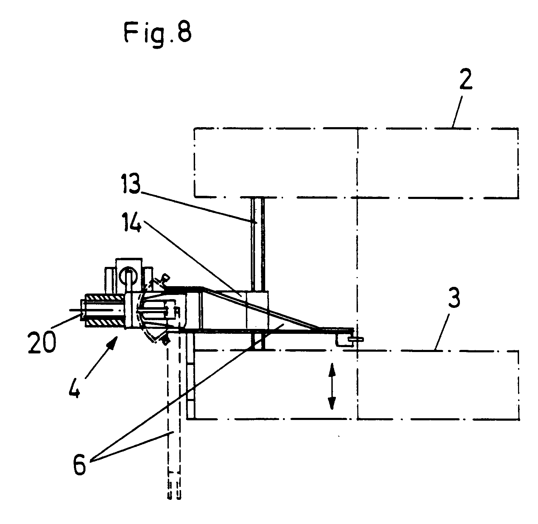

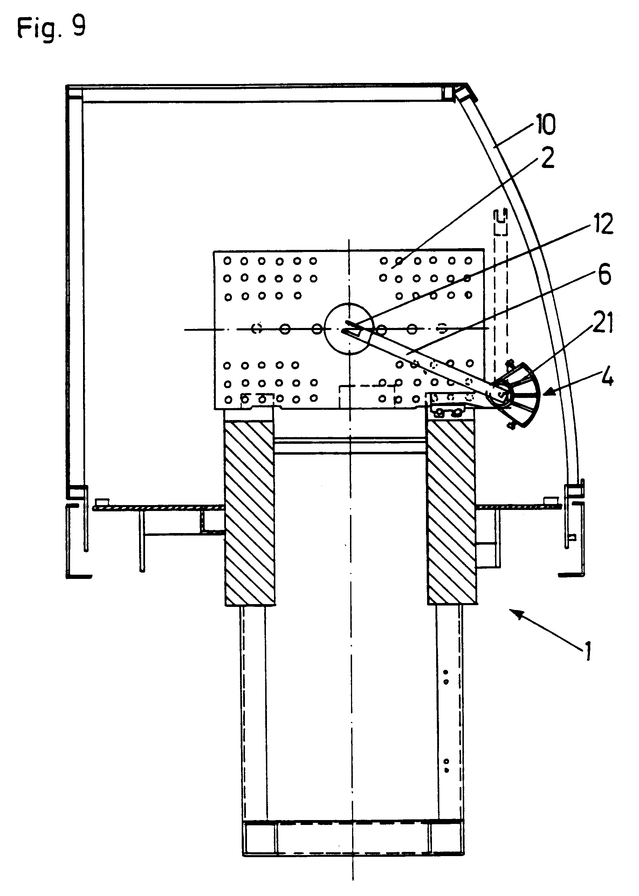

Die Fig. 1 zeigt eine schematisch gehaltene Seitenansicht einer Spritzgießmaschine mit einer erfindungsgemäßen Handhabungsvorrichtung, Fig. 2 zeigt einen Schnitt durch eine Spritzgießmaschine und eine Ansicht der erfindungsgemäßen Handhabungsvorrichtung in Maschinenlängsrichtung, Fig. 3 zeigt eine Ansicht der Handhabungsvorrichtung aus der Richtung des Pfeiles A der Fig. 2, Fig. 4 zeigt eine Ansicht der Handhabungsvorrichtung von Fig. 2 von oben, wobei die Formaufspannplatten der Spritzgießmaschine schematisch eingezeichnet sind, Fig. 5 Zeigt einen Querschnitt durch eine Spritzgießmaschine und eine schematisch gehaltene Stirnansicht der erfindungsgemäßen Handhabungsvorrichtung gemäß einem weiteren Ausführungsbeispiel der Erfindung, Fig. 6 zeigt schematisch eine Draufsicht auf die Handhabungsvorrichtung der Fig. 5, Fig. 7 zeigt einen Querschnitt durch eine Spritzgießmaschine samt Stirnansicht eines weiteren Ausführungsbeispiele der erfindungsgemäßen Handhabungsvorrichtung, die Fig. 8 zeigt eine Draufsicht von Fig. 7 und Fig. 9 zeigt einen Querschnitt durch eine Spritzgießmaschine und Seitenansichten eines weiteren Ausführungsbeispieles bzw. der Anordnung der erfindungsgemäßen Handhabungsvorrichtung.

In den Figuren der Zeichnung ist der Maschinenrahmen der Spritzgießmaschine ganz allgemein mit 1 bezeichnet. Die feste Formaufspannplatte trägt das Bezugszeichen 2 und die bewegliche Formaufspannplatte das Bezugszeichen 3.

Im Ausführungsbeispiel nach den Fig. 1 und 2 ist die erfindungsgemäße Handhabungsvorrichtung 4 auf einer Schiene 5 gelagert, die an der Rückseite der Spritzgießmaschine 1 montiert ist. Die Handhabungsvorrichtung 4 kann mit ihrem Greifarm 6 über die Länge der Schiene 5 verfahren werden.

An der Rückseite der Spritzgießmaschine 1 ist unterhalb der Handhabungsvorrichtung 4 ein Förderband 7 angeordnet, das zur Aufnahme und Weitertransport der aus der Form entfernten Spritzlinge dient.

Zum Zweck der Entnahme des Spritzlings kann der Greifarm 6 um eine zur Maschinenlängsachse parallele Achse wie in Fig. 2 angedeutet in den Bereich zwischen den beiden Formaufspannplatten 2 und 3 geschwenkt werden, wo er das Teil mittels einer Greifbewegung und/oder Ansaugen des Teils linear entformt. Anschließend erfolgt eine Ausschwenkbewegung, die den Greifarm 6 in die vertikale Ausgangsposition bringt. Daraufhin erfolgt eine (in Fig. 1 angedeutete) Schwenkbewegung des Greifarmes 6 um eine horizontale Querachse 20, bis der Greifarm 6 horizontal ausgerichtet ist. In dieser Position läßt der Greifarm 6 den Spritzling los, der beispielsweise durch eine Öffnung 8 auf das Förderband 7 fällt und von diesem weitertransportiert wird.

Die Schiene 5 ist von seitlich auskragenden Stützen 9 gehalten und befindet sich außerhalb des Schließbereiches der Formaufspannplatten 2, 3. Da sich die Schiene 5 in den Bereich hinter der feststehenden Aufspannplatte 2 erstreckt, kann das Handhabungsgerät gegebenenfalls so weit verschoben werden, daß es den Werkzeugwechsel, also den Austausch der auf den Formaufspannplatten befestigten Formhälften, nicht behindert. Von Bedeutung ist, daß der Greifarm 6 mit der gesamten Handhabungsvorrichtung 4 innerhalb des Maschinenschutzgitters 10 angeordnet ist.

Bei dem Ausführungsbeispiel nach der Fig. 5 ist das Handhabungsgerät 4 längsverfahrbar an der Oberseite der feststehenden Formaufspannplatte 2 angeordnet. Der Greifarm 6 ist als Winkelarm ausgebildet, mit zwei im rechten Winkel zueinanderstehenden Armen 6', 6''.

Zur Entnahme des Spritzlinges wird der Greifarm 6, wie in der Fig. 5 strichliert eingezeichnet, erst in den Schließbereich der Formen bzw. in den Düsenbereich der Spritzgießmaschine 1 eingeschwenkt, worauf ein Ergreifen oder Ansaugen des Teiles und eine lineare Entformbewegung folgt, worauf der Greifarm 6 wieder in die vertikale Ausgangsposition der Handhabungsvorrichtung ausschwenkt. Anschließend kann eine Schwenkbewegung um eine vertikale Achse erfolgen (Fig. 6). Hat der Greiferarm 6 die Abgabestellung erreicht, wird der Spritzling entkuppelt und wiederum beispielsweise auf ein Förderband 7 abgelegt. Wiederum erfolgt die gesamte Manipulation mit dem Spritzling innerhalb der Schutzabdeckung 10 der Spritzgießmaschine 1.

Im Ausführungsbeispiel nach den Fig. 7 und 8 ist die Handhabungsvorrichtung 4 auf einer der Führungsschienen 13, die zur Führung der beweglichen Formhälfte 3 dienen, mittels eines Laufschuhs 14 od. dgl. gelagert.

Vorteilhaft ist die Handhabungsvorrichtung 4 mit der beweglichen Aufspannplatte 3 verbunden und macht deren Fahrbewegung mit. Der Greiferarm 6 ist wiederum in einer Ebene, die senkrecht zur Maschinenlängsachse ausgerichtet ist, in den Düsenbereich schwenkbar und außerhalb des Formbereiches aus der vertikalen Position, die strichliert in Fig. 7 gezeigt ist, in eine horizontale Position, die strichliert in der Fig. 8 gezeigt ist, schwenkbar.

Im Ausführungsbeispiel nach der Fig. 9 ist die Handhabungsvorrichtung 4, bei der der Greifarm 6 die gleichen Schwenkbewegungen, wie beim Ausführungsbeispiel nach Fig. 7, ausführt, an der Bedienungsseite der Spritzgießmaschine 1 angeordnet.

## Patentansprüche

1. Spritzgießmaschine (1) mit einem Maschinenrahmen (18) und mit Formaufspannplatten (2, 3), die Formhälften tragen, wobei der Raum zwischen den Formaufspannplatten (2, 3) frei von den üblichen Längsholmen ist, dadurch gekennzeichnet, daß sie mit einer Handhabungsvorrichtung (4) zum Entfernen geformter Kunststoffteile aus dem Raum zwischen den Formhälften tragenden Formaufspannplatten (2, 3) versehen ist, wobei die in Längsrichtung der Spritzgießmaschine (1) verfahrbare Handhabungsvorrichtung (4) einen in sich starren Greifarm (6) aufweist, der um eine parallel zur Längsrichtung der Spritzgießmaschine (1) verlaufende Achse schwenkbar ist und wobei die Handhabungsvorrichtung (4) mit dem Greifarm (6) am Maschinenrahmen (18) gelagert ist.

2. Spritzgießmaschine nach Anspruch 1, dadurch gekennzeichnet, daß die Handhabungsvorrichtung (4) auf einer seitlich am Maschinenrahmen (18) montierten Schiene (5) verfahrbar ist.

3. Spritzgießmaschine nach Anspruch 1 oder 2, dadurch gekennzeichnet, daß der Greifarm (6) zusätzlich um eine horizontale Querachse (20) schwenkbar ist, wobei der Greifarm (6) in Draufsicht parallel zu einem neben der Spritzgießmaschine (1) angeordneten Förderband (7) ausrichtbar ist.

4. Spritzgießmaschine nach Anspruch 1, dadurch gekennzeichnet, daß sie mit dem Greifarm (6) auf einer Führungsschiene (13) für die bewegliche Formträgerplatte (3) fahrbar gelagert ist.

5. Spritzgießmaschine nach mindestens einem der Ansprüche 1 bis 4, dadurch gekennzeichnet, daß der Greifarm (6) innerhalb des Maschinenschutzgitters bzw. -gehäuses (10) angeordnet ist.

## Claims

1. An injection moulding machine (1) having a machine frame (18) and mould mounting plates (2, 3) which carry mould halves, wherein the space between the mould mounting plates (2, 3) is free from the usual longitudinal bar members, characterised in that it is provided with a handling apparatus (4) for the removal of moulded plastics components from the space between the mould mounting plates (2, 3) carrying mould halves, wherein the handling apparatus (4) which is displaceable in the longitudinal direction of the injection moulding machine (1) has a gripping arm (6) which is rigid in itself and which is pivotable about an axis extending parallel to the longitudinal direction of the injection moulding machine (1) and wherein the handling apparatus (4) with the gripping arm (6) is mounted on the machine frame (18).

2. An injection moulding machine according to claim 1 characterised in that the handling apparatus is displaceable on a rail (5) mounted laterally on the machine frame (18).

3. An injection moulding machine according to claim 1 or claim 2 characterised in that the gripping arm (6) is additionally pivotable about a horizontal transverse axis (20), wherein in plan view the gripping arm (6) can be oriented parallel to a conveyor belt (7) arranged beside the injection moulding machine (1).

4. An injection moulding machine according to claim 1 characterised in that it is mounted movably with the gripping arm (6) on a guide rail (13) for the movable mould carrier plate (3).

5. An injection moulding machine according to at least one of claims 1 to 4 characterised in that the gripping arm (6) is arranged within the machine guard grill or housing (10).

## Revendications

1. Presse d'injection (1) avec un bâti (18) et avec des plateaux porte-outillage (2, 3), qui portent des demi-moules, l'espace entre les plateaux porte-outillage (2, 3) étant dégagé des éléments longitudinaux habituels, caractérisée en ce qu'elle est équipée d'un dispositif de maniement (4) pour retirer des pièces moulées en matière plastique de l'espace entre les plateaux porte-outillage (2, 3) portant des demi-moules, le dispositif de maniement (4), mobile dans la direction longitudinale de la presse d'injection (1), présentant un grappin (6) rigide en soi, qui peut pivoter autour d'un axe s'étendant parallèlement à la direction longitudinale de la presse d'injection (1), et le dispositif de maniement (4) étant situé avec le grappin (6) sur le bâti (18).

2. Presse d'injection selon la revendication 1, caractérisée en ce que le dispositif de maniement (4) est mobile sur un rail (5) installé latéralement sur le bâti (18).

3. Presse d'injection selon la revendication 1 ou 2, caractérisée en ce que le grappin (6) peut en plus pivoter autour d'un axe transversal horizontal (20), le grappin (6), vu du dessus, étant orienté parallèlement à un convoyeur (7) disposé à côté de la presse d'injection (1).

4. Presse d'injection selon la revendication 1, caractérisée en ce qu'elle est située de façon mobile avec le grappin (6) sur un rail de guidage (13) pour le plateau porte-moule (3) mobile.

5. Presse d'injection selon au moins une des revendications 1 à 4, caractérisée en ce que le grappin (6) est disposé à l'intérieur de la grille ou du carter de protection de la machine (10).
